# EUROPÄISCHE PATENTSCHRIFT

(11) **EP 2 102 400 B1**
(45) Veröffentlichungstag und Bekanntmachung des Hinweises auf die Patenterteilung: **13.04.2011**
(21) Anmeldenummer: 07785685.4
(22) Anmeldetag: 03.08.2007
(51) Int. Cl.: D04H 3/04

(54) **VERFAHREN ZUR KONTINUIERLICHEN HERSTELLUNG EINER MULTIAXIALEN GELEGEBAHN**
METHOD FOR THE CONTINUOUS PRODUCTION OF A MULTIAXIAL CONTEXTURE WEB
PROCÉDÉ DE FABRICATION CONTINUE D'UNE BANDE DE CANEVAS MULTIAXIALE

(30) Priorität: 04.08.2006 DE 102006036866; 05.09.2006 DE 102006042047; 05.12.2006 DE 102006057633; 05.12.2006 DE 102006057634; 05.12.2006 DE 102006057635; 05.12.2006 DE 102006057636; 14.02.2007 DE 102007007919
(43) Veröffentlichungstag der Anmeldung: 23.09.2009
(60) Teilanmeldung: 09009973.0
(73) Patentinhaber: MD Fibertech Corporation, Sausalito, CA 95965 (US)
(72) Erfinder: SCHOLTEN, Friedhelm, 47198 Duisburg (DE); SZUKAT, Klaus, 03792 Parcent (ES)
(74) Vertreter: Demski, Siegfried
(86) Internationale Anmeldenummer: PCT/DE2007/001379
(87) Internationale Veröffentlichungsnummer: WO 2008/014784

(56) Entgegenhaltungen:
- WO-A-2005/033393
- DE-A1-102005 000 115
- US-A1- 2003 148 082
- DATABASE WPI Week 200419 Thomson Scientific, London, GB; AN 2004-194313 XP002484883 & JP 2003 221771 A (FUKUI KEN PREFECTURE) 8. August 2003 (2003-08-08)

## Beschreibung

Die Erfindung betrifft ein Verfahren zur kontinuierlichen Herstellung einer multiaxialen Gelegebahn, in welchem ein Gelege durch Wickeln um eine Ebene zu einem multiaxialen Gelege umgeformt wird und eine Vorrichtung zur Durchführung des Verfahrens.

Langfaserverstärkte Faserverbundbauteile sind ein wichtiges Anwendungsgebiet für technische Textilien. Aufbau und Struktur des Verstärkungstextiles bestimmen im Zusammenspiel mit der Herstellungstechnologie sowie dem verwendeten Matrixmaterial maßgeblich die Eigenschaft des späteren Verbundbauteils. Multiaxiale Gelege, auch MD- oder multidirektionale Gelege genannt, spielen dabei eine besondere Rolle, denn sie erlauben im Vergleich zu anderen Textilien Flächenkonstruktionen, die eine höhere Ausnutzung der spezifischen Eigenschaften der verwendeten Fasern bei gleichzeitiger Reduzierung der Herstellungs- und damit Bauteilkosten bieten.

Zur Herstellung von multiaxialen Gelegen wird auf verschiedene Techniken zurückgegriffen. Eine naheliegende Technologie ist der Rückgriff auf ein webähnliches Verfahren, in dem ein Schussfaden unter einem Winkel zur Erstreckungsrichtung der Gelegebahn gelegt wird. Dieses Verfahren ist jedoch langsam und erlaubt bei den feinen Fasern eine nur geringe Herstellungsgeschwindigkeit. Wesentlich schneller zur Herstellung hat sich ein Verfahren herausgestellt, in welchem uniaxiale Gelege, auch UD oder unidirektionale Gelege genannt, durch Wickeln um eine Ebene zu einem multiaxialen Gelege umgeformt werden.

In der Offenlegungsschrift DE 10 2005 000 115 A1 wird ein Verfahren zur Herstellung einer multidirektionalen Gelegebahn offenbart, wobei in diesem Verfahren um ein Gelege, dessen Fasern in Erstreckungsrichtung der Gelegebahn ausgerichtet sind, zwei weitere Bahnen mit einem Winkel zur Erstreckungsrichtung gewickelt werden, wobei ein multiaxiales Gelege entsteht. Dieses multiaxiale Gelege weist somit mindestens drei Schichten auf. Diese sind die beiden gegenüber liegenden Schichten des unter einem Winkel gewickelten Geleges und die sogenannte Null-Grad-Bahn, welche Fasern in Erstreckungsrichtung der Gelegebahn aufweist. Ein derartiges Gelege weist positive Eigenschaften in Bezug auf Zugfestigkeit auf.

Die japanische Patentanmeldung JP 2003 221771A betrifft ein Verfahren zur Herstellung einer multiaxialen Gelegebahn offenbart, in welchem ausschließlich die unter einem Winkel gewickelten Gelegebahnen um zwei etwa handbreite Bänder gewickelt werden, die in dem Gelege verbleiben. Durch dieses Verfahren entsteht ein multiaxiales Gelege, welches verstärkte Ränder aufweist. Die verstärkten Ränder haben einerseits den Vorteil, dass hierdurch das Gelege gerade an den Rändern eine hohe Zähigkeit oder eine hohe Stabilität aufweist, auf der anderen Seite hat dieses Gelege den Nachteil, dass durch die an den Rändern erhöhe Stärke des Materials das Material nicht stabil auf eine Rolle gewickelt werden kann und andererseits ist es hierdurch nicht möglich, gleichmäßige Schichtdicken eines faserverstärkten Kunststoffes aufzubauen, da die seitlichen Bänder das Gelege unnötig in seiner Stärke erhöhen.

Aufgabe der Erfindung ist es daher, ein Verfahren zur Herstellung eines multiaxialen Geleges zur Verfügung zu stellen, welches die Nachteile aus dem Stand der Technik überwindet.

Die erfindungsgemäße Aufgabe wird gelöst durch die Verwendung von Spannelementen als Begrenzung der Ebene, um welche das unidirektionale Gelege gewickelt wird, wobei die Spannelemente nach Wicklung der so hergestellten Gelegebahn entfernbar oder abtrennbar sind. Weitere vorteilhafte Ausgestaltungen der Erfindung ergeben sich aus den Unteransprüchen.

Gegenüber dem Verfahren, das in der JP 2003 221771A offenbart ist, wird erfindungsgemäß ein Paar von zugfesten Spannelementen verwendet, welche als Wickelebene für die schräg zur Erstreckungsrichtung des Geleges angeordneten Gelegebahnen dienen. Hierdurch entsteht eine multiaxiale Gelegebahn, welche zunächst nur locker aneinander haftet, und nach Aufwicklung durch zwei Kalandrierwalzen gezogen wird. In den Kalandrierwalzen sind entsprechende Vertiefungen eingebracht, in welchen die Spannelemente laufen, sodass der Abstand der Kalandrierwalzen unabhängig von den Abmessungen der Spannelemente gewählt werden kann. Der Kalandrierer fügt die Gelegebahnen so fest zusammen, dass diese gegebenenfalls unter Verwendung von Binde- oder Klebemittel ein festes multiaxiales Gelege bilden. Zusätzlich besteht die Möglichkeit das Gelege zusammen oder ohne Spannelemente einem Imprägnierverfahren oder Fixierverfahren zu unterziehen, damit das Gelege zur weiteren Verarbeitung aufwicketbar und wesentlich leichter handhabbar ist. Unmittelbar nach Kalandrierung oder Imprägnierung kann durch einen randseitigen Schnitt die multiaxiale Gelegebahn von den Spannelementen getrennt werden. Bei diesem Schnitt werden die entfernten Spannelemente entweder auf einer weiteren Trommel aufgewickelt, wobei die Spannelemente optional vor Aufwicklung noch von an den Spannelementen haftenden Fasern befreit werden können. Es ist aber ebenso möglich, die Spannelemente statt Aufwicklung wieder in den Prozess zurückzuführen, sodass die Spannelemente in einer Endlosschleife geführt werden. Ferner ist es möglich, die Spannelemente aufzuwickeln und nachdem die Gelegebahnen, aus denen das multiaxiale Gelege erstellt wird, abgewickelt wurden, können die aufgewickelte Spannelemente wieder in den Prozess zurückgeführt werden, indem diese auf einer Abwickelrolle dem Produktionsprozess wieder zugeführt werden. Ferner besteht die Möglichkeit, anstelle des Abtrennen die Spannelemente aus dem Gelege bei der weiteren Verarbeitung herauszuziehen, sofern sichergestellt wurde, dass keine Anhaftung des Geleges an den Spannelementen erfolgt.

Das unidirektionale Gelege wird der Wickelebene quer zu deren Erstreckungsrichtung zugeführt, wobei beispielsweise zwischen der Erstreckungsrichtung und der Zuführrichtung ein Winkel von 45° eingeschlossen sein kann. Je nach Anforderung können aber auch andere Winkel zwischen 0° und 90° eingeschlossen sein. Ferner kann es zweckmäßig sein, eine dritte Bahn eines uniaxialen Geleges zu zuführen, welche beispielsweise zwischen den quer zugeführten uniaxialen Gelegen positioniert wird. Dieses dadurch erzeugte dreilagige, multiaxiale Gelege ist besonders geeignet, Zugspannungen in Längserstreckung des multiaxialen Geleges aufzunehmen, welche beispielsweise durch das Abziehen des multiaxialen Geleges von der Wickelebene auftreten können. Diese zusätzliche dritte Lage kann aus dem gleichen Material wie die schräg zugeführten uniaxialen Gelege oder aus einem anderen geeigneten Material bestehen. Somit kann beispielsweise als dritte Lage ein Klebegitter oder Haftgitter zugeführt werden, mit dem aneinanderliegenden Lagen uniaxialen Geleges miteinander verklebbar sind.

Es ist weiterhin vorteilhaft, wenn die Vertiefungen in der Mantelfläche der Kalanderwalzen derart ausgebildet sind, dass in Längsrichtung in den multiaxialen Gelege auftretende Zugkräfte nur im Bereich der Vertiefungen, dass heißt im Bereich der in dem multiaxialen Gelege angeordneten Spannelemente auftreten, und der übrige, mittig zwischen den Spannelementen angeordnete Teil des multiaxialen Geleges im Wesentlichen spannungsfrei bleibt. Diese Ausgestaltung ermöglicht auf einfache Art und Weise die Herstellung eines multiaxialen Geleges hoher Qualität.

Es wird weiter vorgeschlagen, dass das multiaxiale Gelege nach dem Kalandrieren mittels einer Stachelwalze oder eines Nadelbalkens behandelt, dass heißt mit Löchern versehen wird, welche dafür vorgesehen sind, dass bei einer eventuellen späteren Verharzung des multiaxialen Geleges das dabei verwendete Harz gut in das multiaxiale Gelege eindringen kann, um ein möglichst hochwertiges Material gleichmäßiger Güte bereitzustellen. Die dabei in das multiaxiale Gelege eingebrachten Löcher können je nach Anforderung nach unterschiedlichsten Mustern in das multiaxiale Gelege eingebracht werden.

Zur Durchführung des Verfahrens gibt es prinzipiell zwei verschiedene Möglichkeiten. In einer ersten Möglichkeit werden in dem Verfahren zwei Rollen, auf denen unidirektionale Gelege aus Fasermaterialien vorgehalten werden, verwendet. Diese Rollen liegen auf einer starren Achse vor. Die Rollen, von denen das unidirektionale Gelege entnommen wird, sind dabei gegenüber angeordnet und zwischen den Rollen ist eine Anordnung aufgebaut, in welcher die beiden Spannelemente, die als Begrenzung einer Wickelebene für das unidirektionale Gelege dienen, abgewickelt und durch zwei Kalandrienrvalzen geführt werden. Dabei können die Spannelemente vor Kalandrierung entfernt werden, wobei die Kalandrierwalzen dem Gelege die nötige mechanische Spannung verleihen. Alternativ können die Spannelemente nach der Kalandrierung entfernt werden. Die beiden Spannelemente werden dann um eine mittig und parallel zu den beiden Spannelementen liegende Achse gedreht und wickeln so von den Rollen, die das uniaxiale Gelege zur Verfügung stellen, das uniaxiale Gelege ab und wickeln es um die Ebene, die durch die beiden Spannelemente aufgespannt wird. Mit der Ebene, die sich mit den beiden Spannelementen dreht, dreht sich auch ein Paar von Kalandrierwalzen und in der Nähe der Kalandrierwalzen befinden sich ebenfalls mitdrehende Vorrichtungen, welche vor oder nach Kalandrierung beispielweise durch einen Schnitt die Spannelemente vom Rand des multiaxialen Geleges entfernen. Dabei werden die Spannelemente parallel zum multiaxialen Gelege aufgewickelt oder wieder in den Prozess zurückgeführt. Ein optionaler Schritt ist die Reinigung der abgeschnittenen Spannelemente von verbleibenden Faser- und Bindemittelresten. Da durch den Schnitt seitlich offene Fasern in dem multiaxialen Gelege entstehen, hat es sich als vorteilhaft erwiesen, wenn die Seitenränder des multiaxialen Geleges durch eine entsprechende Vorrichtung versäumt werden, sodass das Gelege nicht dazu neigt, gegebenenfalls an den Seiten auszufransen, womit das multiaxiale Gelege schlechter zu verarbeiten wäre.

In einer zweiten Ausführungsform des erfindungsgemäßen Verfahrens ist es auch möglich, dass die gesamte Vorrichtung, in welcher die Spannelemente ab- und wieder aufgewickelt werden, die Kalandrierwalzenpaare und die Schnitt- und Versäumvorrichtung stationär gehalten werden, während die beiden Rollen mit dem undirektionalen Gelege um die Ebene der Spannelemente gewickelt werden.

In beiden Ausführungsvarianten existiert eine Relativbewegung der Ebene, die durch die Spannelemente aufgespannt wird, gegenüber dem Material mit dem uniaxialen Gelege, das auf den Rollen vorgehalten und auf die Ebene gewickelt wird.

Um den Wickelvorgang zu stabilisieren, ist vorgesehen, dass in einer bevorzugten Ausführungsform des erfindungsgemäßen Verfahrens die Spannelemente aufgeraut sind oder dass die Spannelemente mit einem Binde- oder Klebemitte versehen sind. Das Aufrauen der Spannelemente beziehungsweise die Bindemittel oder die Klebemittelbeschichtung der Spannelemente hat zur Folge, dass die Spannelemente das Gelege, aus denen das multiaxiale Gelege erstellt wird, sicherer greifen, was zur Folge hat, dass das so entstehende Gelege gleichmäßiger geformt ist und das abgewickelte unidirektionale Gelege nicht dazu neigt, noch während des Kalandriervorganges und des anschließenden Abtrennungsvorganges zu verrutschen. Dabei kann in einer weiteren Ausführungsform des erfindungsgemäßen Verfahrens auch ein Gelege verwendet werden, welches geringfügig Bindemittel aufweist, sodass die ineinander gewickelten uniaxialen Gelege aneinander haften und eine stabilere Gelegebahn entsteht. Dabei ist es auch möglich, dass als Ausgangsmaterial ein so genanntes Prepreg benutzt wird, in welchen die Fasern bereits mit einem noch nicht abgebundenen Bindemittel oder mit einem nicht polymerisierten Klebemittel versehen sind, das in einem optional späteren Vorgang optional ausgehärtet werden kann. Darüber hinaus ist es auch möglich, ein Haftfadengitter zur Stabilisierung der Gelegebahnen zu verwenden, das zwischen den Spannelementen abgewickelt und geführt wird und die Bahnen miteinander verbindet.

Eine so hergestellte multiaxiale Gelegebahn kann aus verschiedenen Fasermaterialien hergestellt werden. Es ist möglich, gebundene Textilien als Ausgangsmaterial für die multiaxiale Gelegebahn zu verwenden, es können Gewebe verwendet werden, Gewirke, aber auch Vliese oder uni- oder multidirektional angeordnete Einzelfasern, Rovings, Fäden oder Faserschichten.

Das Material, aus denen die Fasern bestehen, kann Glas, Kohle oder Aramidfasern sein, alternativ können Naturfasern, wie Flachs, Jute oder Sisal verwendet werden. Es ist auch möglich, dass Kunststofffasern verwendet werden, wie Polypropylen, PBO, Polyester oder Polyethylen.

Die verwendeten Spannelemente können aus Drähten oder Bändern bestehen, die gegebenenfalls aus Metall gefertigt sind. Alternativ besteht die Möglichkeit Kunststoff zu verwenden, wobei vorzugsweise das Gelegematerial zum Einsatz kommt, sodass ferner die Möglichkeit besteht das fertiggestellte Gelege zusammen mit den Spannelementen dem weiteren Produktionsprozess zuzuführen. In diesem Falle brauchen selbstverständlich die Spannelemente nicht von dem Gelege getrennt zu werden.

Zur Durchführung des Verfahrens ist eine Vorrichtung vorgesehen, die zumindest eine Wickelrolle für Fasermaterial, eine Kalendrier- und gegebenenfalls eine Abtrenneinheit sowie Rollen zur Auf- und Abwickelung der Spannelemente vorsieht, wobei die Spannelemente parallel gespannt von Rollen abgewickelt und dadurch in eine Ebene gehalten werden, die die Ebene zum Umwickeln des Geleges aufspannt. Zusätzlich kann diese Vorrichtung mit einer Abtrenneinheit verbunden werden, sodass die Spannelemente bereits kurz nach dem Wickelprozess entfernt werden können. Alternativ besteht die Möglichkeit, dass das Gelege zusammen mit den Spannelementen durch eine Imprägniereinheit geführt wird, sodass nach erfolgter Aushärtung ein flexibles aber in sich stabiles Gelege hergestellt wird. Spätestens nach der Imprägniereinheit können die Spannelemente entfernt werden oder, für den Fall dass diese selbst aus Gelegematerial bestehen, in dem Gelege verbleiben.

Die Erfindung wird anhand der folgenden Figur näher erläutert.

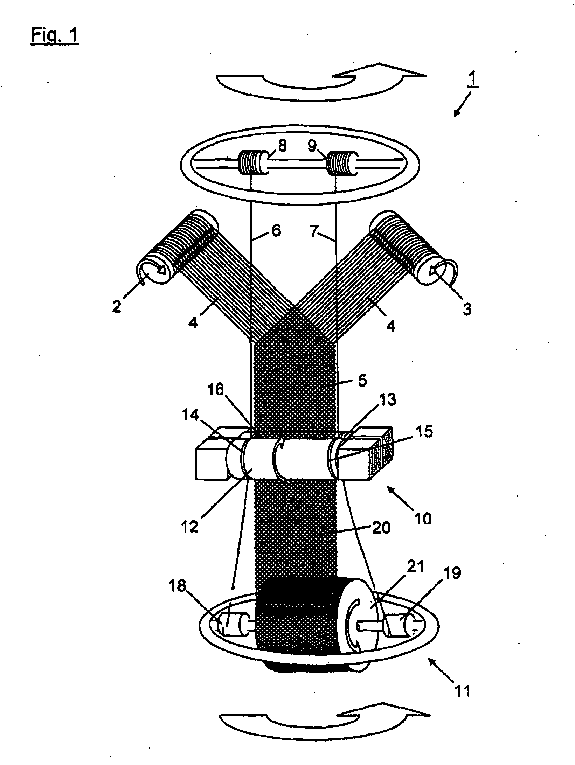

Es zeigt
- Fig. 1: eine Skizze der wesentlichen Elemente zur Durchführung des erfin- dungsgemäßen Verfahrens.

In Figur 1 ist eine Wickelvorrichtung 1 abgebildet, die zum Verfahren zur kontinuierlichen Herstellung einer multiaxialen Gelegebahn verwendet werden kann. In der Wickelvorrichtung 1 befinden sich zwei Wickelrollen 2 und 3, von denen Fasermaterial 4 abgewickelt und zu dem multiaxialen Gelege 5 umgeformt wird. Dabei sind die Wickelrollen 2 und 3 stationär angeordnet, das bedeutet, dass diese sich im Raum nicht bewegen, außer dass sie um die eigene Achse rotieren, damit das Fasermaterial 4 abgewickelt werden kann. Parallel zur Erstreckung des multiaxialen Geleges 5 sind in der Wickelvorrichtung 1 zwei Spannelemente 6 und 7 gespannt, die von Rollen 8 und 9 abgewickelt werden und als Begrenzung einer Ebene dienen, die durch die beiden Spannelemente 6 und 7 aufgespannt wird. Durch eine synchrone Drehung der Rollen 8, 9, einer Kalandrier- und Abtrenneinheit 10 und der Aufwickeleinheit 11 drehen sich die Spannelemente 6 und 7 um eine Achse, die parallel und mittig zu den beiden Spannelementen 6 und 7 verläuft.

In der vorliegenden Abbildung greift Spannelement 6 von hinten an das Gelege, das von der Wickelrolle 2 abgewickelt wird und das Spannelement 7 greift von vorne auf das Gelege, das von der Wickelrolle 3 abgewickelt wird. Hierdurch wird das Gelege um die Ebene gewickelt, die durch die Spannelemente 6 und 7 aufgespannt wird. Dabei wird das Fasermaterial 4 zu einem multiaxialen Gelege 5 umgeformt. Kurz vor Eintritt des multiaxialen Geleges 5 in die Kalandrier- und Abtrenneinheit 10, ist das muliaxiale Gelege noch nicht verfestigt. Nach Durchtritt durch die Kalandrier- und Abtrenneinheit 10, wobei die Kalandrier- und Abtrenneinheit 10 zwei Walzen 12 und 13 aufweist, durch die das multiaxiale Gelege 5 hindurch gezogen wird, ist das multiaxiale Gelege 5 verfestigt. In den Walzen 12 und 13 befinden sich radiale Nuten 14, 15, 16 und 17, welche die Spannelemente 6 und 7 aufnehmen. Wie im vorliegenden Beispiel können unmittelbar nach der Kalandrierung hinter dem Ausgang der beiden Walzen 12 und 13 Messer angeordnet sein, die das multiaxiale Gelege 5 nach Austritt aus der Kalandrier- und Abtrenneinheit 10 mit einem Schnitt an den seitlichen Rändern von den Spannelementen 6 und 7 befreien. Es ist aber auch möglich, die Spannelemente vor der Kalandrierung zu entfernen und das Gelege spannelementefrei in den Kalander zu führen.

In der vorliegenden beispielhaften Wickelvorrichtung 1 werden sodann die Spannelemente 6 und 7 auf Rollen 18 und 19 aufgewickelt, und in dieser Abbildung werden die Spannelemente 6 und 7 nicht in das Verfahren zurückgeführt. Es ist aber auch möglich, die Spannelemente 6 und 7 endlos in das Verfahren zurückzuführen. Das multiaxiale Gelege 5 wird nach Kalandrierung zu dem multiaxialen Gelege 20, das sodann auf einer Rolle 21 aufgewickelt wird. Sowohl die Rollen 8 und 9, die Kalandrier- und Abtrenneinheit 10 und die Rollen 18, 19 und 21 rotieren synchron, aber es ist auch möglich, dass die Rollen 8, 9, die Kalandrier- und Abtrenneinheit 10 sowie die Rollen 18, 19 und 21 stationär gehalten werden und sich die Wickelrollen 2 und 3 um die Achse der Wickelvorrichtung 1 drehen, wobei das Fasermaterial 4 von den Wickelrollen 2 und 3 zu dem multiaxialen Gelege 5 umgeformt wird, wobei durch die Kraft der Rolle 21 und die Kraft der Walzen 12 und 13 das multiaxiale Gelege 5 kontinuierlich nach unten gezogen wird und das Fasermaterial 4 von den Wickelrollen 2 und 3 zieht.

Die vorbeschriebenen Ausführungsbeispiele dienen der Erläuterung und sind nicht beschränkend.

### Bezugszeichenliste

- 1: Wickelvorrichtung
- 2: Wickelrolle
- 3: Wickelrolle
- 4: Fasermaterial
- 5: Gelege
- 6: Spannelement
- 7: Spannelement
- 8: Rolle
- 9: Rolle
- 10: Kalandrier- und Abtrenneinheit
- 11: Aufwickeleinheit
- 12: Walze
- 13: Walze
- 14: Nut
- 15: Nut
- 16: Nut
- 17: Nut
- 18: Rolle
- 19: Rolle
- 20: Gelege
- 21: Rolle

## Patentansprüche

1. Verfahren zur kontinuierlichen Herstellung einer multiaxialen Gelegebahn (20), in welchem ein Fasermaterial (4) durch Wickeln um eine Ebene zu einem multiaxialen Gelege (5) umgeformt wird,
**gekennzeichnet durch**
die Verwendung von Spannelementen (6, 7) als Begrenzung der Ebene, um welche das Fasermaterial (4) gewickelt wird, wobei die Spannelemente (6, 7) nach Wicklung der so hergestellten Gelegebahn aus der Gelegebahn entfernbar oder abtrennbar sind.

2. Verfahren nach Anspruch 1,
**dadurch gekennzeichnet,**
**dass** das Gelege (5) zusammen mit den Spannelementen (6, 7) einem Imprägnier- oder Fixierverfahren unterzogen wird.

3. Verfahren nach einem der Ansprüche 1 oder 2,
**dadurch gekennzeichnet,**
**dass** die Spannelemente (6, 7) durch randseitige Schnitte abtrennbar sind.

4. Verfahren nach Anspruch 1, 2 oder 3,
**gekennzeichnet durch**
die Rückführung der abgetrennten Spannelemente (6, 7) in den Wickelprozess.

5. Verfahren nach einem der Ansprüche 1 bis 4,
**gekennzeichnet durch**
den Umlauf von Gelegerollen (2, 3) mit unidirektionalem Gelege (5) um sich in Erstreckungsrichtung der multidirektionalen Gelegebahn bewegende Spannelemente (6, 7) und/oder die Verwendung einer rotierenden Wickeleinheit, die von ortsfest gehaltenen Gelegerollen (2, 3) mit unidirektionalem Fasermaterial (4) das unidirektionale Gelege (4) mit Hilfe der Spannelemente (6, 7) abwickelt.

6. Verfahren nach einem der Ansprüche 1 bis 5,
**gekennzeichnet durch**
die Verwendung eines Kalanders, in dessen Walzen (12, 13) Vertiefungen (14, 15, 16, 17) vorgesehen sind, in denen die Spannelemente (6, 7) geführt werden und/oder die Abstreifung von nach Abtrennung auf den Spannelemente (6, 7) verbliebenem Gelegematerial.

7. Verfahren nach einem der Ansprüche 1 bis 6,
**gekennzeichnet durch**
eine Versäumung der Ränder des multidirektionalen Geleges (20) nach Abtrennung der Spannelemente (6, 7).

8. Verfahren nach einem der Ansprüche 1 bis 7,
**gekennzeichnet durch**
die Verwendung von aufgerauten Spannelementen (6, 7), insbesondere von Drähten und Bändern, die aus Metall oder Kunststoff, vorzugsweise aus Gelegematerial bestehen.

9. Verfahren nach einem der Ansprüche 1 bis 8,
**gekennzeichnet durch**
die Verwendung von einer Haftbeschichtung auf den Spannelementen (6, 7) und/oder die Verwendung eines Haftfadengitters, das zwischen den Spannelementen (6, 7) abgewickelt und geführt wird und die Fasermaterialien miteinander verbindet.

10. Verfahren nach einem der Ansprüche 1 bis 9,
**gekennzeichnet durch**
die Rückführung der Spannelemente (6, 7) in das Verfahren.

11. Verfahren nach einem der Ansprüche 1 bis 10,
**gekennzeichnet durch**
die Verwendung von Fasermaterial (4) für die Gelegebahn (20), das ausgewählt ist aus der Gruppe bestehend aus: gebundene Textilien, Gewebe, Gewirke, Vliese, uni- oder multidirektional angeordnete Einzelfasern, Rovings, Fäden oder Faserschichten.

12. Verfahren nach einem der Ansprüche 1 bis 11,
**gekennzeichnet durch**
die Verwendung von Fasermaterial (4) für die Gelegebahn (20), das ausgewählt ist aus der Gruppe bestehend aus: Glas-, Kohle- und Aramidfasern, Naturfaser wie Flachs, Jute, Sisal und Kunststofffaser, wie Polypropylen, PBO, Polyester und Polyethylen.

13. Vorrichtung zur Durchführung des Verfahrens nach einem der Ansprüche 1 bis 12, aufweisend zumindest eine Wickelrolle (2, 3) für Fasermaterial (4), eine Kalandriereinheit (10) und Rollen (8, 9) zur Ab- und Aufwicklung von Spannelementen (6, 7), wobei die Spannelemente parallel gespannt von Rollen (8, 9) abwickeln und **dadurch** eine Ebene aufspannen und diese Ebene sich relativ zu den Wickelrollen (2, 3) für das Fasermaterial (4) dreht, wodurch sich das Fasermaterial (4) um die Ebene wickelt und wobei das durch die um die Ebene gewickelte Material durch die Kalandriereinheit (10) läuft.

14. Vorrichtung zur Durchführung des Verfahrens nach Anspruch 13,
**dadurch gekennzeichnet,**
**dass** das gewickelte Fasermaterial (4) durch eine Imprägniereinheit führbar ist, welche unmittelbar an der Wickelrolle angeordnet ist und/oder dass die Kalandriereinheit (10) zusätzlich eine Abtrenneinheit für die Spannelemente (6, 7) aufweist.

15. Vorrichtung zur Durchführung des Verfahrens nach einem der Ansprüche 12, 13 oder 14,
**dadurch gekennzeichnet,**
**dass** die Abtrenneinheit die Spannelemente (6, 7) durch seitliche Schnitte von dem um die Ebene gewickelten Material abtrennt.

## Claims

1. Method for the continuous manufacture of a multiaxial fabric web (20), in which a fibre material (4) is reshaped to a multiaxial fabric (5) by winding around a plane, **characterized by**
the use of clamping elements (6, 7) as a boundary of the plane around which the fibre material (4) is wound, wherein the clamping elements (6, 7) can be removed or detached from the fabric web after the fabric web manufactured in this manner has been wound up.

2. Method according to claim 1,
**characterized in that**
the fabric (5) is subjected to an impregnation or fixing method together with the clamping elements (6, 7).

3. Method according to one of claims 1 or 2,
**characterized in that**
the clamping elements (6, 7) can be detached by cuts at the edges.

4. Method according to claim 1, 2 or 3,
**characterized by**
the return of the detached clamping elements (6, 7) to the winding process.

5. Method according to one of claims 1 to 4,
**characterized by**
the circulation of fabric rolls (2, 3) with unidirectional fabrics (5) around clamping elements (6, 7) moving in the direction of extension of the multidirectional fabric web, and/or the use of a rotating winding unit which winds off the unidirectional fabric (4) by means of the clamping elements (6, 7) from stationarily held fabric rolls (2, 3) with unidirectional fibre material (4).

6. Method according to one of claims 1 to 5,
**characterized by**
the use of a calender in whose rollers (12, 13) indentations (14, 15, 16, 17) are provided in which the clamping elements (6, 7) are guided, and/or taking off fabric material that has remained on the clamping elements (6, 7) after the detachment.

7. Method according to one of claims 1 to 6,
**characterized by**
a seaming of the edges of the multidirectional fabric (20) after the clamping elements (6, 7) have been detached.

8. Method according to one of claims 1 to 7,
**characterized by**
the use of roughened clamping elements (6, 7), in particular of wires and bands, which consist of metal or plastics, preferably of fabric material.

9. Method according to one of claims 1 to 8,
**characterized by**
the use of an adhesive coating on the clamping elements (6, 7) and/or the use of a tacking thread grid which is wound off and guided between the clamping elements (6, 7) and connects the fibre materials with each other.

10. Method according to one of claims 1 to 9,
**characterized by**
the return of the clamping elements (6, 7) to the process.

11. Method according to one of claims 1 to 10,
**characterized by**
the use of fibre material (4) for the fabric web (20), which is selected from the group consisting of: bound textiles, woven cloth, knitted fabrics, non-woven fabrics, individual fibres with unidirectional or multidirectional arrangement, rovings, threads or fibre layers.

12. Method according to one of claims 1 to 11,
**characterized by**
the use of fibre material (4) for the fabric web (20), which is selected from the group consisting of: glass, carbon and aramid fibres, natural fibres, such as flax, jute, sisal, and plastic fibre, such as polypropylene, PBO, polyester and polyethylene.

13. Device for carrying out the method according to one of claims 1 to 12, comprising at least one winding roll (2, 3) for fibre material (4), a calendering unit (10) and rolls (8, 9) for winding up and off clamping elements (6, 7), wherein the clamping elements are stretched in parallel and wind off from rolls (8, 9) and thereby span a plane, and this plane rotates relative to the winding rolls (2, 3) for the fibre material (4), whereby the fibre material (4) winds around the plane and whereby the material wound around the plane runs through the calendering unit (10).

14. Device for carrying out the method according to claim 13,
**characterized in that**
the wound fibre material (4) can be guided through an impregnation unit which is arranged directly at the winding roll, and/or that the calendering unit (10) additionally comprises a detachment unit for the clamping elements (6, 7).

15. Device for carrying out the method according to one of claims 12, 13 or 14, **characterized in that**
the detachment unit detaches the clamping elements (6, 7) from the material wound around the plane by lateral cuts.

## Revendications

1. Procédé de production en continu d'une bande multiaxiale de non-tissé (20), dans lequel un matériau fibreux (4) est transformé par enroulement autour d'un plan en un ensemble de fibres uniaxial (5), **caractérisé par** l'utilisation d'éléments de tension (6, 7) comme limitation du plan, autour desquels le matériau fibreux (4) est enroulé, les éléments de tension (6, 7) étant détachables ou séparables après enroulement de la bande de non-tissé ainsi produite.

2. Procédé selon la revendication 1, **caractérisé par le fait que** le non-tissé (5) est soumis à un procédé d'imprégnation ou de fixation conjointement avec les éléments de tension (6, 7).

3. Procédé selon l'une des revendications 1 ou 2, **caractérisé par le fait que** les éléments de tension (6, 7) sont séparables par des incisions périphériques.

4. Procédé selon la revendication 1, 2 ou 3, **caractérisé par** le retour des éléments de tension séparés (6, 7) dans le processus d'enroulement.

5. Procédé selon une des revendications 1 à 4, **caractérisé par** la rotation de rouleaux de non-tissés (2, 3) avec un non-tissé unidirectionnel (5) autour d'éléments mobiles (6, 7) dans la direction d'extension de la bande de non-tissé et/ou l'utilisation d'une unité d'enroulement en rotation, qui déroule le non-tissé unidirectionnel (4) à l'aide des éléments de tension (6, 7) à partir des rouleaux de non-tissé (2, 3) maintenus fixes avec un matériau fibreux unidirectionnel (4).

6. Procédé selon une des revendications 1 à 5, **caractérisé par** l'utilisation d'une calandre, dans les cylindres (12, 13) de laquelle sont prévus des renfoncements (14, 15, 16, 17), dans lesquels les éléments de tension (6, 7) sont guidés et/ou le raclage du matériau fibreux restant sur les éléments de tension (6, 7) après la séparation.

7. Procédé selon une des revendications 1 à 6, **caractérisé par** un ourlage des bords du non-tissé multidirectionnel (20) après séparation des éléments de tension (6, 7).

8. Procédé selon une des revendications 1 à 7, **caractérisé par** l'utilisation d'éléments de tension rugueux (6, 7), en particulier de fils et de bandes, qui sont constitués de métal ou de matière synthétique, préférentiellement d'un matériau non-tissé.

9. Procédé selon une des revendications 1 à 8, **caractérisé par** l'utilisation d'une couche d'adhérence sur les éléments de tension (6, 7) et/ou l'utilisation d'une grille de fibres d'adhésion qui est déroulée et guidée entre les éléments de tension (6, 7) et relie les matériaux fibreux entre eux.

10. Procédé selon une des revendications 1 à 9, **caractérisé par** le retour des éléments de tension (6, 7) dans le procédé.

11. Procédé selon une des revendications 1 à 10, **caractérisé par** l'utilisation de matériau fibreux (4) pour la bande de non-tissé (20), qui sont sélectionnés à partir du groupe constitué de : textiles, tissus, tricots, non-tissés liés, de fibres uniques, mèches, fils ou couches fibreuses disposés de façon unidirectionnelle ou multidirectionnelle,

12. Procédé selon une des revendications 1 à 11, **caractérisé par** l'utilisation de matériau fibreux (4) pour la bande de non-tissé (20), qui sont sélectionnés à partir du groupe constitué de : fibres de verre, de carbone et d'aramide, fibres naturelles comme le lin, le jute, le sisal et fibres artificielles, comme le polypropylène, le PBO, le polyester et le polyéthylène.

13. Dispositif destiné à la réalisation du procédé selon l'une des revendications 1 à 12, présentant au moins un rouleau bobiné (2, 3) destiné à un matériau fibreux (4), une unité de calandrage (10) et des rouleaux (8, 9) destinés à l'enroulement et au déroulement d'éléments de tension (6, 7), les éléments de tension (8, 9) déroulant en position tendue en parallèle à partir de rouleaux et tendant ainsi un plan et le plan pivotant par rapport aux rouleaux bobinés (2, 3) destinés au matériau fibreux (4), le matériau fibreux (4) s'enroulant autour du plan tandis que le matériau enroulé autour du plan passe à travers l'unité de calandrage (10).

14. Dispositif destiné à la réalisation du procédé selon la revendication 13, **caractérisé par le fait que** le matériau fibreux (4) enroulé peut être guide à travers une unité d'imprégnation disposée directement au niveau du rouleau bobiné et/ou que l'unité de calandrage (10) présente en outre une unité de séparation pour les éléments de tension (8, 7).

15. Dispositif destiné à la réalisation du procédé selon l'une des revendications 12, 13 ou 14, **caractérisé par le fait que** l'unité de séparation sépare les éléments de tension (6, 7) du matériau enroulé autour du plan par des incisions latérales.
